## Europäisches Patentamt
## European Patent Office
## Office européen des brevets

(19)

(11) Numéro de publication: **0 036 381**
**B1**

(12)

# FASCICULE DE BREVET EUROPEEN

(45) Date de publication du fascicule du brevet:
**02.11.83**

(51) Int. Cl.³: **B 29 D 23/10,** B 31 C 1/00,
B 21 C 37/06, B 32 B 1/08

(21) Numéro de dépôt: **81440010.7**

(22) Date de dépôt: **03.03.81**

(54) **Procédé de formage de profilés, notamment de profilés tubulaires.**

(30) Priorité: **11.03.80 FR 8005684**

(73) Titulaire: **Sireix, Georges, 9, rue St.Marc,
F-68400 Riedisheim (FR)**

(43) Date de publication de la demande:
**23.09.81 Bulletin 81/38**

(72) Inventeur: **Sireix, Georges, 9, rue St.Marc,
F-68400 Riedisheim (FR)**

(45) Mention de la délivrance du brevet:
**02.11.83 Bulletin 83/44**

(74) Mandataire: **Aubertin, François, Cabinet BUGNION
PROPRIETE INDUSTRIELLE 4, rue de Haguenau,
F-67000 Strasbourg (FR)**

(84) Etats contractants désignés:
**AT BE CH DE GB IT LI LU NL SE**

(56) Documents cités:
**DE - A - 2 706 936
DE - C - 106 316
FR - A - 400 670
FR - A - 1 172 212
FR - A - 2 380 129
GB - A - 872 578
GB - A - 885 656
GB - A - 1 037 400
US - A - 2 256 263
US - A - 2 342 988**

## Procédé de formage de profilés, notamment de profilés tubulaires

L'invention concerne un procédé de formage de profilés, notamment de profilés tubulaires obtenus par l'encollage de plusieurs bandes en matériaux fibreux, cellulosiques, métalliques, plastiques et autres, décalées latéralement l'une par rapport à l'autre.

On connaît déjà, par le brevet américain US-A-2256263 et par la demande de brevet français FR-A-2380129, un procédé de formage de profilés fermés et/ou ouverts constitués d'une pluralité de couches de matériaux en bandes fibreuses, cellulosiques, métalliques et plastiques. Selon ce procédé, on prend plusieurs bobines de matériaux en bande dont la largeur correspond à la longueur de la circonférence ou du périmètre du profilé final à réaliser. La largeur de chaque bande est augmentée en fonction de l'épaisseur du matériau utilisé. Chaque bande est décalée latéralement par rapport à la bande voisine. De ce fait, les chants latéraux des différentes bandes présentent, en vue en coupe, la forme d'un escalier. Les différentes bandes sont recouvertes de colle, et on procède à l'assemblage des différentes bandes pour constituer l'âme du profilé. Cette âme est ensuite soumise au formage par des pliages, de sorte que les chants latéraux de chaque bande soient mis bout à bout. Du fait que les différentes bandes sont décalées l'une par rapport à l'autre et, par voie de conséquence, les chants latéraux, les jointures des chants latéraux sont également décalées, ce qui permet de diminuer le risque d'ouverture longitudinale du profilé tubulaire réalisé.

De même, on connaît, par le brevet anglais GB-A-872570, un procédé, une machine et un moule intérieur à pression pour fabriquer en discontinu des flancs de boîte, des boîtes, etc., avec des feuilles de placage de bois ou d'une autre matière fibreuse. On dispose sur un moule extérieur une pièce formée de deux ou plusieurs feuilles de placage recouvertes d'une colle ou d'une résine artificielle. Par l'intermédiaire de vérins agissant sur le moule extérieur, on plie la pièce autour d'un moule intérieur. Puis, la pièce est alors soumise à la pression sur toutes ses faces jusqu'à ce que la colle ou la matière plastique adhésive ait durci.

Toutefois, ces procédés présentent plusieurs inconvénients et, en particulier, on crée dans le profilé tubulaire réalisé selon ce procédé des tensions différentes en fonction de la bande. En effet, en induisant et en collant les différentes bandes sur toute leur largeur, on obtient ainsi une bande compacte d'une épaisseur correspondant à la somme des différentes épaisseurs des bandes. La longueur de la circonférence et/ou la longueur du périmètre du profilé tubulaire sont différentes pour la face interne et pour la face externe. Ainsi, en procédant au formage, la face interne est soumise à un effet de plissage et la face externe est mise sous tension. De ce fait, on risque que la jointure bout à bout des chants latéraux de la bande externe s'ouvre notamment lorsque ladite tension est supérieure à la force de collage de la jointure. Par ailleurs, le plissage de la face interne peut non seulement détériorer l'aspect esthétique du profilé tubulaire utilisé en tant qu'emballage, mais également entraîner des inconvénients techniques, notamment lorsque la bande interne doit rendre étanche ledit emballage. En effet, les bosses dues au plissage peuvent présenter des poches d'air ou des poches creuses et le contenant risque de déchirer ces poches. Ces inconvénients sont connus dans l'art, par exemple par le brevet allemand DE-C-108316.

La présente invention a pour but de remédier à ces inconvénients. L'invention, telle qu'elle est caractérisée dans les revendications, résout le problème consistant à fabriquer en continu des profilés tubulaires obtenus par l'encollage de plusieurs bandes en matériaux fibreux, cellulosiques, métalliques, plastiques et autres matériaux, ces différentes bandes étant décalées latéralement l'une par rapport à l'autre en assemblant initialement ces bandes, préalablement enduites de colle sur au moins une de leurs faces, sur une faible largeur, puis à étendre la surface d'assemblage par une progression hélicoïdale de cette largeur d'assemblage à tout le périmètre du profilé tubulaire.

Les avantages obtenus grâce à cette invention consistent essentiellement en ceci que la bande extérieure n'est plus soumise à une tension différente des autres bandes et, de ce fait, on supprime les risques de déchirure.

Par ailleurs, la bande intérieure est également soumise à la même tension que les autres bandes, et on évite une plissure de la bande intérieure, plissure risquant de provoquer le décollage de cette bande intérieure des autres bandes.

L'invention est exposée ci-après plus en détail, à l'aide de dessins représentant seulement des modes d'exécution.

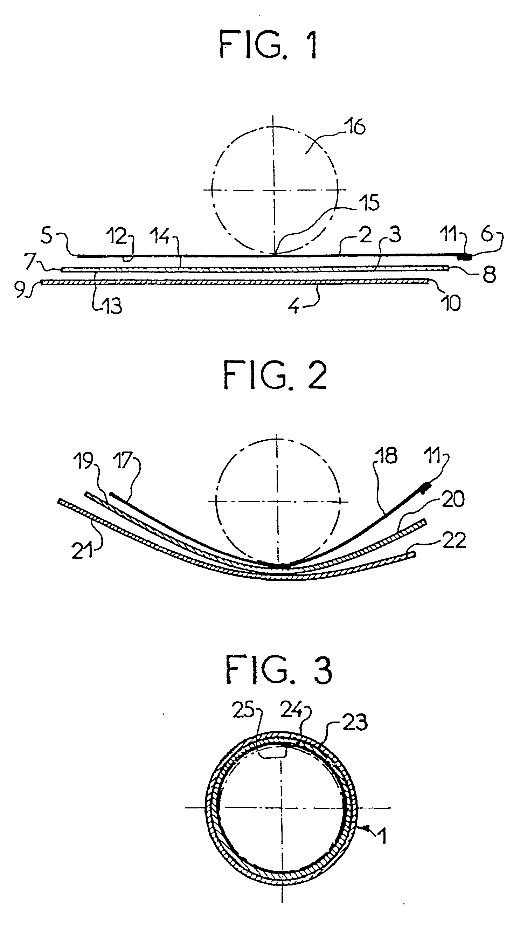

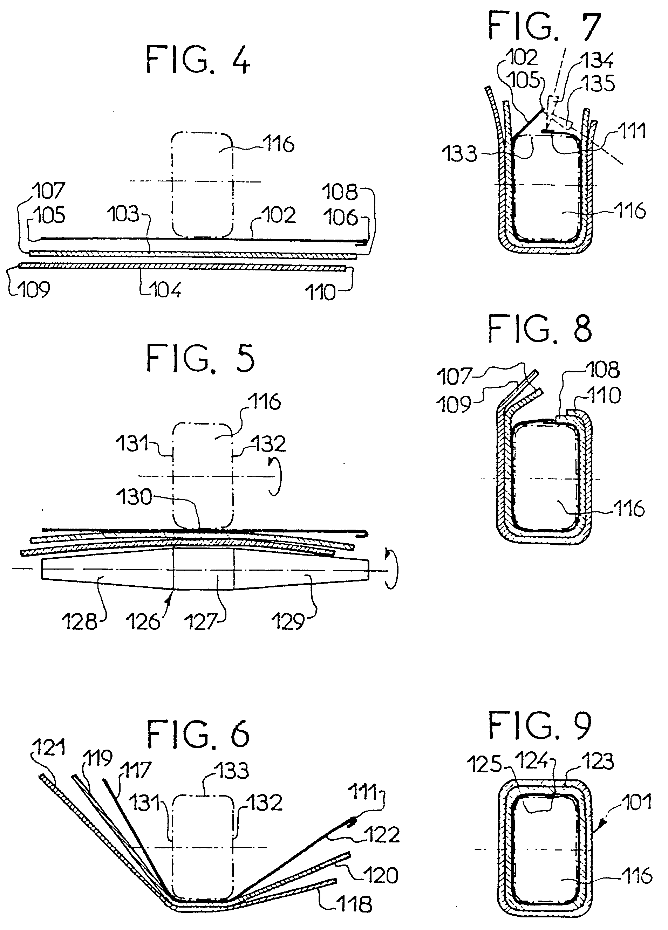

Les fig. 1 à 3 sont des schémas synoptiques des différentes phases de formage d'un profilé tubulaire ayant une section circulaire; les fig. 4 à 9 sont des schémas synoptiques des différentes phases de formage d'un profilé tubulaire de section rectangulaire.

Le procédé selon l'invention se rapporte à la fabrication en continu d'un profilé tubulaire à partir de bandes en matériaux fibreux, cellulosiques, métalliques, plastiques et autres, se déroulant continuellement de bobines dont le nombre est fonction du nombre des bandes et traversant des bacs de collage, assemblées en continu en vue de l'obtention finale d'un profilé tubulaire.

On se réfère aux fig. 1 à 3.

A titre d'exemple non limitatif, le profilé tubulaire 1, de section circulaire, est constitué de plusieurs bandes 2, 3, 4 en matières fibreuses, cellulosiques, métalliques et plastiques. Selon cet exemple, la bande 2 est en matière plastique alors que les deux autres bandes 3, 4 sont en matières fibreuses. Les chants latéraux 5, 6 de la bande 2 sont décalés latéralement par rapport aux chants latéraux 7, 8 de la bande 3. Ces derniers sont également décalés par rapport aux chants latéraux 9, 10 de la bande 4. De ce fait, vus en coupe, les chants latéraux 5, 7 et 9 présentent la forme d'un escalier. La bande en matière plastique 2 présente sur un de ses chants latéraux 6 une bordure 11 permettant de souder ensemble les deux chants latéraux 5 et 6.

Avant le formage, on enduit de colle au moins une des faces 12, 13 des bandes 3, 4. Selon une variante, on enduit de colle les deux faces 13, 14 de toute bande intercalée 3. Ainsi, lorsque le nombre de bandes est impair, on enduit les deux faces de chaque bande paire.

L'ensemble de bandes 2, 3, 4 avance selon une génératrice 15 d'un mandrin 16. On exerce selon cette génératrice 15 une certaine pression, de sorte que les bandes 2, 3, 4 sont assemblées sur une faible largeur. Toutefois, les extrémités 17, 18, 19, 20, 21, 22 des bandes 2, 3, 4 ne sont pas assez assemblées.

Après cet assemblage partiel, les différentes bandes 2, 3, 4 sont dirigées vers un dispositif de formage étendant latéralement la zone d'assemblage à tout le périmètre du profilé tubulaire 1 que l'on désire obtenir.

En raison de la combinaison, d'une part, de l'extension de la largeur d'assemblage et, d'autre part, de l'avance en continu de l'ensemble de bandes 2, 3, 4, on obtient une progression hélicoïdale de la largeur d'assemblage. Au cours de cette progression hélicoïdale de l'assemblage, les extrémités 17, 18, 19, 20, 21, 22 des bandes 2, 3, 4 peuvent s'étendre latéralement avant l'assemblage final, ce qui permet d'éviter que, d'une part, la bande extérieure 4 soit soumise à une tension supérieure à la bande 3 et que, d'autre part, la bande intérieure 2 se frippe.

Le collage de ces extrémités 17 à 21 ne se fait donc uniquement qu'au fur et à mesure du passage des différentes bandes 2, 3, 4 à travers le dispositif de formage du profilé tubulaire 1.

Avant la jonction finale des chants latéraux 7 à 10, on procède à la soudure des deux chants latéraux 5, 6 de la bande en matière plastique 2 si le profilé en dispose, sinon on colle tout simplement.

La largeur des bandes 2 à 4 est telle que, après formage du profilé tubulaire 1 et malgré le déploiement des extrémités 17 à 22, les deux chants latéraux de chaque bande 2, 3, 4 sont bout à bout. En raison du décalage de chaque bande, les jointures 23, 24, 25 sont également décalées, ce qui annihile l'ouverture intempestive du profilé tubulaire 1 après son formage.

On se réfère aux fig. 4 à 9.

Pour la réalisation d'un profilé tubulaire 101 de section rectangulaire, on peut également utiliser les trois bandes 102, 103, 104. Les chants latéraux 105, 106, 107, 108, 109 et 110 sont également décalés les uns par rapport aux autres.

Après avoir enduit de colle les bandes 102, 103, 104, on introduit les bandes 102, 103, 104 entre un mandrin 116 et un rouleau 126. Le mandrin 116 présente une section identique à celle du profilé tubulaire 101 que l'on veut réaliser. Le rouleau 126 est composé d'une partie cylindrique 127, aboutant à deux parties tronconiques 128, 129. De ce fait, le collage des bandes 102, 103, 104 ne se fait que sur une faible largeur, largeur correspondant, d'une part, au chant inférieur 130 du mandrin 116 et, d'autre part, à la largeur de la partie cylindrique 127 du rouleau 126 (voir fig. 5). Puis on applique, contre les parois verticales 131, 132 du mandrin 116, les extrémités 117 à 122 des bandes 102 à 104, ces parois verticales 131, 132 étant des places adjacentes au chant inférieur 130. Dans le cas d'une section polygonale à n côtés, on continue le collage simultané des extrémités 117 à 122 jusqu'à ce que toutes les places soient recouvertes, sauf en ce qui concerne le dernier plan 133 qui est maintenu à nu. Bien entendu, les chants 105 à 110 desdites bandes 102 à 104 dépassent d'une certaine longueur le plan supérieur 133 du mandrin 116 (voir fig. 6).

Comme visible sur la fig. 7, on préchauffe par une buse appropriée 134 la bordure 111 de la bande 102 puis, par une seconde buse 135, placée en aval de la buse 134, vue dans le sens d'avance du profilé tubulaire 101, on chauffe également le chant latéral 105 de la bande 102, ce qui permet la soudure de la bande 102.

Puis, comme indiqué dans la fig. 8, on assemble les chants 108, 110 enduits de colle et, finalement, on assemble les chants 107, 109 pour obtenir le profilé tubulaire 101. Egalement, selon cette variante, les jointures 123, 124, 125 sont décalées.

Ainsi, la progression hélicoïdale de l'assemblage des bandes 102, 103, 104 se décompose en segments dont le nombre est fonction du nombre de côtés du profilé tubulaire de section polygonale 101.

## Revendications

1. Procédé de formage en continu de profilés, notamment de profilés tubulaires (1 ; 101) obtenus par l'encollage de plusieurs bandes (2, 3, 4 ; 102, 103, 104) en matériaux fibreux, cellulosiques, métalliques, plastiques et autres, décalées latéralement l'une par rapport à l'autre et enduites de colle sur au moins une de leurs faces avant l'assemblage, caractérisé en ce que l'assemblage des bandes (2, 3, 4 ; 102, 103, 104) est réalisé initialement sur une faible largeur, puis étendu à tout le périmètre du profilé tubulaire (1 ; 101) en cours de formage par une progression hélicoïdale de cette largeur d'assemblage, progression hélicoïdale constituée par la combinaison, d'une part, de l'extension latérale de la largeur d'assemblage et, d'autre part, de l'avance en continu de l'ensemble des bandes (2, 3, 4 ; 102, 103, 104) pour un déploiement latéral d'une bande (2, 3, 4 ; 102, 103, 104) par rapport à l'autre au fur et à mesure du formage en continu du profilé tubulaire (1 ; 101).

2. Procédé selon la revendication 1, caractérisé en ce que la faible largeur de l'assemblage initial des bandes (2, 3, 4), dans le cas d'un profilé tubulaire de section circulaire (1), correspond à une génératrice (15) d'un mandrin (16).

3. Procédé selon la revendication 1, caractérisé en ce que, dans le cas d'un profilé tubulaire de section polygonale (101), la faible largeur de l'assemblage initial des bandes (102, 103, 104) est identique à la largeur d'un des côtés du profilé (101) et correspond à la largeur du chant inférieur (130) d'un mandrin (116) coopérant avec une partie cylindrique (127), aboutant à deux parties tronconiques (128, 129) d'un rouleau (126).

4. Procédé selon la revendication 1, caractérisé en ce que, dans le cas d'un profilé tubulaire de section circulaire (1), les extrémités (17 à 22) des bandes (2 à 4), disposées de part et d'autre de la faible largeur de l'assemblage initial, sont collées ensemble en fin de la progression hélicoïdale de l'assemblage de l'ensemble des bandes (2 à 4).

5. Procédé selon les revendications 1 et 3, caractérisé en ce que, dans le cas d'un profilé tubulaire de section polygonale (101), la progression hélicoïdale de l'assemblage de l'ensemble des bandes (102, 103, 104) est une progression hélicoïdale décomposée en segments, dont le nombre est fonction du nombre de côtés du profilé tubulaire de section polygonale (101).

6. Procédé selon les revendications 1, 3 et 5, caractérisé en ce que la progression hélicoïdale de l'assemblage de l'ensemble des bandes (102, 103, 104) est décalée d'un côté par rapport à l'autre pour un collage d'un des chants (106, 108, 110) des bandes (102, 103, 104), suivi du collage de l'autre chant (105, 107, 109) des bandes (102, 103, 104).

7. Procédé selon les revendications 1 et 6, caractérisé en ce que, dans le cas d'un revêtement interne en matière plastique, on interpose entre le début et la fin de la progression hélicoïdale de l'assemblage de l'ensemble des bandes (2, 3, 4; 102, 103, 104) un soudage décalé d'un chant (6; 106) de la bande interne (2; 102) par rapport au soudage de l'autre chant (5; 105) de la bande interne (2; 102).

8. Procédé selon les revendications 1 et 7, caractérisé en ce que l'on chauffe, par une première buse (134), le chant (6; 106) pourvu d'une bordure (11) de la bande interne en matière plastique (2; 102) puis, par une seconde buse (135), disposée en aval de la première, le chant (5; 105) de la bande interne (2; 102).


**Claims**

1. Method for the continuous formation of profiles, especially tubular profiles (1; 101) obtained by adhesion of several strips (2, 3, 4; 102, 103, 104) of fibrous, cellulosic, metallic, plastic and other materials, laterally staggered in relation to one another and covered with adhesive on at least one of their surfaces before assembly, characterized by the fact that assembly of strips (2, 3, 4; 102, 103, 104) is initially effected over a narrow width then extended to the entire perimeter of the tubular profile (1; 101) in course of formation by helicoid progression of such width of assembly, a helicoid progression made up of the combination, on the one hand, of the lateral extension of the width of assembly and, on the other hand, of the continuous forward movement of all of the strips (2, 3, 4; 102, 103, 104) in order to effect lateral deployment of one strip (2, 3, 4; 102, 103, 104) in relation to the other progressively with continuous formation of the tubular profile (1; 101).

2. Process in accordance with claim 1, characterized by the fact that the narrow width of the initial assembly of strips (2, 3, 4) in the case of a tubular profile of circular section (1) corresponds to a generator (15) of a tube (16).

3. Process in accordance with claim 1, characterized by the fact that, in the case of a tubular profile of polygonal section (101), the narrow width of the initial assembly of strips (102, 103, 104) is identical with the width of one the sides of the profile (101) and corresponds to the width of the lower face (130) of a tube (116) interacting with a cylindrical part (127) adjoining two truncated conical parts (128, 129) of a roller (126).

4. Process in accordance with claim 1, characterized by the fact that, in the case of a tubular profile of circular section (1), the ends (17 to 22) of the strips (2 to 4), arranged at various points on the narrow width of the initial assembly, are stuck together at the end of the helicoid progression of the assembly of all of the strips (2 to 4).

5. Process in accordance with claims 1 and 3, characterized by the fact that, in the case of a tubular profile of polygonal section (101), the helicoid progression of the assembly of all of the strips (102, 103, 104) is a helicoid progression broken down into segments of which the quantity is a function of the number of sides of the tubular profile of polygonal section (101).

6. Process in accordance with claims 1, 3 and 5, characterized by the fact that the helicoid progression of the assembly of all of the strips (102, 103, 104) is staggered on one side as compared with the other in order to result in bonding of one of the faces (106, 108, 110) of the strips (102, 103, 104), followed by bonding of the other face (105, 107, 109) of the strips (102, 103, 104).

7. Process in accordance with claims 1 and 6, characterized by the fact that, where there is a plastic internal covering, a welding of one face (6; 106) of the inside strip (2; 102) staggered in reaction to the welding of the other face (5; 105) of the inside strip (2; 102), is interposed between the beginning and the end of the helicoid progression of the assembly of all the strips (2, 3, 4; 102, 103, 104).

8. Process in accordance with claims 1 and 7, characterized by the fact that the face (6; 106) having a border (11) of the inside plastic strip (2; 102) is heated by a first nozzle (134), then the face (5; 105) of the inside strip (2; 102) by a second nozzle (135) placed downstream from the first.

## Patentansprüche

1. Verfahren zum kontinuierlichen Formen von Profilen, insbesondere von röhrenförmigen Profilen (1; 101) durch Leimen mehrerer Streifen (2, 3, 4; 102, 103, 104), die aus Stoffen aus Fasern, Zellulose, Metall, Plasten und sonstigen Materialien bestehen, gegeneinander seitlich versetzt und mit einem Leim auf mindestens einer ihrer Flächen beschichtet sind, bevor sie zusammengefügt werden, dadurch gekennzeichnet, dass das Zusammenfügen der Streifen (2, 3, 4; 102, 103, 104) zunächst auf einer geringfügigen Breite durchgeführt und dann auf die gesamte äussere Begrenzung des röhrenförmigen Profils (1; 101) im Laufe des Formungsvorgangs durch spiralförmiges Fortführen dieser Zusammenfügungsbreite ausgedehnt wird, wobei diese spiralförmige Fortführung sich zusammensetzt aus einer Kombination einerseits der seitlichen Ausdehnung der Zusammenfügungsbreite und andererseits des kontinuierlichen Vorschubs des Streifenganzen (2, 3, 4; 102, 103, 104) für eine seitliche Spreitung eines Streifens (2, 3, 4; 102, 103, 104) gegenüber dem anderen in Entsprechung der kontinuierlichen Formung des röhrenförmigen Profils (1; 101).

2. Verfahren nach Anspruch 1, dadurch gekennzeichnet, dass die geringfügige Breite der anfänglichen Zusammenfügung der Streifen (2, 3, 4) bei rührenförmigen Profilen von kreisförmigem Querschnitt (1) einer Erzeugenden (15) eines Dorns (16) entspricht.

3. Verfahren nach Anspruch 1, dadurch gekennzeichnet, dass bei einem röhrenförmigen Profil von polygonalem Querschnitt (101) die geringfügige Breite der anfänglichen Zusammenfügung der Streifen (102, 103, 104) identisch ist mit der Breite einer Seite des Profils (101) und der Breite der unteren Kante (103) eines Dorns (116) entspricht, der mit einem zylinderförmigen, in zwei kegelstumpfartige Abschnitte (128, 129) einer Rolle (126) auslaufenden Teil (127) zusammenarbeitet.

4. Verfahren nach Anspruch 1, dadurch gekennzeichnet, dass bei einem röhrenförmigen Profil von kreisförmigem Querschnitt (1) die beiderseits der geringfügigen Breite der anfänglichen Zusammenfügung angeordneten Enden (17 bis 22) der Streifen (2 bis 4) am Ende der spiralförmigen Fortführung des Zusammenfügens des Streifenganzen (2 bis 4) miteinander verleimt werden.

5. Verfahren nach den Ansprüchen 1 und 3, dadurch gekennzeichnet, dass bei einem röhrenförmigen Profil von polygonalem Querschnitt (101) die spiralförmige Fortführung des Zusammenfügens des Streifenganzen (102, 103, 104) sich in Segmente zerlegt, deren Anzahl Funktion der Anzahl der Seiten des röhrenförmigen Profils von polygonalem Querschnitt (101) ist.

6. Verfahren nach den Ansprüchen 1, 3 und 5, dadurch gekennzeichnet, dass die spiralförmige Fortführung des Zusammenfügens des Streifenganzen (102, 103, 104) zum Leimen einer der Kanten (106, 108, 110) der Streifen (102, 103, 104) gefolgt vom Leimen der anderen Kante (105, 107, 109) der Streifen (102, 103, 104) von einer Seite gegenüber der anderen versetzt ist.

7. Verfahren nach den Ansprüchen 1 und 6, dadurch gekennzeichnet, dass bei einem Innengezug aus Plaststoff zwischen dem Anfang und dem Ende der spiralförmigen Fortführung der Zusammenfügung des Streifenganzen (2, 3, 4; 102, 103, 104) eine Schweissung eingefügt wird, die von einer Kante (6; 106) des Innenstreifens (2; 102) gegenüber der Schweissung der anderen Kante (5; 105) des Innenstreifens (2; 102) versetzt ist.

8. Verfahren nach den Ansprüchen 1 und 7, dadurch gekennzeichnet, dass mittels einer ersten Düse (134) die mit einem Besatz (11) versehene Kante (6; 106) des Innenstreifens aus Plaststoff (2; 102) und danach mittels einer der ersten Düse nachgeschalteten zweiten Düse (135) die Kante (5; 105) des Innenstreifens (2; 102) erwärmt wird.

# FIG. 1

# FIG. 2

# FIG. 3

FIG. 4

FIG. 7

FIG. 5

FIG. 8

FIG. 6

FIG. 9